# EUROPEAN PATENT APPLICATION

(11) **EP 4 438 807 A1**
(43) Date of publication of application: **02.10.2024**
(21) Application number: 23165551.5
(22) Date of filing: 30.03.2023
(51) Int. Cl.: D21H 19/08, D21H 27/10, D21H 27/32, D21H 27/36, B32B 15/092, B32B 15/12, B32B 27/10

(54) **MULTILAYER**

(71) Applicant: B&T Entwicklungs- und Vermarktungsgesellschaft mbH, 22297 Hamburg (DE)
(72) Inventor: DÖHMEN, Ben, 20144 Hamburg (DE)
(74) Representative: Frei Patent Attorneys

(57) **Abstract**

A multilayer 10 comprises a paper base layer 1, a polymer layer 2 and a supplementary layer 3. The supplementary layer 3 is an application of a metallisation, AlOx-layer and/or SiOx-layer. Furthermore, the supplementary layer 3 provides a water vapor transmission barrier to the multilayer 10. The polymer layer 2 comprises a watersoluble polymer, in particular PVOH.

## Description

The invention relates to the field of polymer multilayer as described in the preamble of the independent claims.

Commercially established packaging materials for high-barrier food-applications pose increasing challenges to oxygen and water vapor transmission. Impregnation of packing materials with wax-based dispersion are strongly limited with respect to their barrier properties. Additionally, is the required amount of wax-based material quite high compared to the overall structure. This influences the fibre recovery rate in a recycling process.

It is therefore an object of the invention to create an alternative multilayer containing a polymer composition and the usage of the multilayer in packaging, in particular food packaging as well as a method to produce the multilayer.

These objects are achieved by a multilayer and a method to manufacture the multilayer according to the independent claims.

A multilayer comprises a paper base layer, a polymer layer and a supplementary layer. The supplementary layer is an application of a metallisation, AlOx-layer and/or SiOx-layer. Furthermore, the supplementary layer has a water vapor and/or humidity transmission barrier. In other words: The supplementary layer provides the water vapor and/or humidity transmission to the multilayer. The polymer layer comprises a water-soluble polymer, in particular PVOH.

The paper base layer can be paper, fibre substrate or paperboard. Paper may especially be a non-woven material, pulp-based material. A pulp-based material is a material made from pulp, i.e., from fibres suspended in a liquid (especially water), which is removed at least partially for the production. The fibres may include vegetable fibres (especially fibres of cellulose (wood-based or from fibre crops)), especially at least 50% or at least 80% vegetable fibres or 100% vegetable fibres. In addition or as an alternative, the fibres may include mineral filler or other natural fibres, or man-made fibres, for example on a calcium carbonate basis.

In embodiments, supplementary layer as application of a metallisation, AlOx-layer and/or SiOx layer can be regarded as three different technologies. The metallisation can have a classic aluminium look, as known from many packaging. The AlOx-layer and/or SiOx layer can be transparent coatings. However, they all have similar applications and each has certain advantages and disadvantages.

In embodiments, the metallisation is done with aluminium.

In embodiment, the supplementary layer can be called inorganic layer. The supplementary layer can be applied as a vapour. In embodiments, the supplementary layer can also be called vapour coating or vapour deposition layer.

In embodiments, the supplementary layer can have a very low layer thickness of a few hundred nanometres to the most. The supplementary layer can be so thin that, no impairment in mechanical recycling is to be expected or has been observed so far.

In embodiments, the water-soluble polymer is cold soluble, meaning that the water-soluble polymer is soluble in cold water. The water-soluble polymer can be soluble in water at a maximum temperature of 40 °C, in particular of 38°C to the most, in particular of 35°C to the most, in particular of 30°C to the most. Such a solubility in water enables an integration of the polymer layer e.g. in a paper recycling cycle, in particular in paper recycling according to DIN EN 13430 (as of the end of 2021).

In embodiments, the multilayer is recyclable in a paper recycling process, in particular in paper recycling process according to DIN EN 13430 (as of the end of 2021). DIN being a European standard.

The multilayer suits the demand of the paper recycling process. This means the multilayer can be disposed in the paper waste bin.

In embodiments, the supplementary layer is rather thin. The supplementary layer can have thickness of a maximum of 800 micrometre, in particular 500 micrometre, in particular 200 micrometre, in particular of 100 micrometre, in particular 50 micrometre, in particular 20 micrometre, in particular 3 micrometre, in particular 1 micrometre, to the most.

The thin supplementary layer does not disturb the paper recycling process. The supplementary layer is so thin that it will hardly be detectable in the pulp. This is why it may also not be filtered. This is a one of the advantages of supplementary layer. Wax coatings, for example, are comparatively extremely thick and can interfere with the recycling process.

In embodiments, the applied metallisation can have thickness of a maximum of 500 micrometre, in particular 200 micrometre, in particular of 100 micrometre, in particular 50 micrometre, in particular 20 micrometre, in particular 3 micrometre, to the most. In embodiments, the metallisation is an aluminium metallisation.

In embodiments, thickness of the AlOx-layer and/or SiOx layer can vary in the range from 1 to 100 nm, in particular 2 to 25 nm, preferably 3 to 50 nm, particularly preferred 5 to 40 nm. In embodiments, the AlOx-layer and/or SiOx layer can have thickness of a maximum of 800 micrometre, in particular 500 micrometre, in particular 200 micrometre, in particular of 100 micrometre, in particular 50 micrometre, in particular 20 micrometre, in particular 3 micrometre, in particular 1 micrometre, to the most.

The water-soluble polymer can comprise a polymer that has a plurality of vinyl alcohol [CH2CH(OH)] groups in the polymer chain, in particular wherein the water-soluble polymer is poly(vinyl alcohol) (PVOH).

The water-soluble polymer can be at least one of:
- poly(vinyl alcohol) (PVOH),
- cellulose-ether polymer,
- Butenediol-Vinylalcohol-Copolymer (BVOH), and
- Ethylene-Vinylalcohol-Copolymers (EVOH).

The water-soluble polymer can comprise at least one vinyl-alcohol copolymer and/or a mixture and/or blend of two or more vinyl-alcohol copolymers. The copolymers can differ in molar mass, molecular architecture, e. g. branching, comonomer type and amount, to name only a few variation parameters.

The water-soluble polymer can comprise further polar comonomers. Examples include maleic acid and maleic acid anhydride, fumaric acid and itaconic acid.

The PVOH can be a vinyl alcohol rich copolymer and/or vinyl alcohol homopolymer. The water-soluble polymer, in particular the polyvinyl alcohol (PVOH), can have a degree of hydrolysis of 70% to 99,9%. The degree of saponification can control the performance to the oxygen transmission barrier. A higher saponification may for instance improve the oxygen transmission barrier performance.

A vinyl-alcohol containing polymer can comprise >75%, in particular >90%, monomer units carrying an OH unit.

The barrier layer can comprise at least one of the following polymers:
- Poly(vinyl alcohol) obtained e.g. by the saponification of Poly(vinyl ester) homopolymers or copolymers,
- Ethylene-Vinylalcohol-Copolymers (EVOH),
- Butenediol-Vinylalcohol-Copolymer (BVOH),
to name only a few.

In some embodiments, the supplementary layer is arranged on one flat side of the polymer layer.

The polymer layer comprises two flat sides, like a piece of paper. In embodiments, the surface of at least one flat side of the polymer layer is arranged adjacent to the supplementary layer.

In some embodiment, the multilayer comprises an oxygen transmission rate (OTR) of a maximum of 3 cm³/m² per day at 23°C and a relative humidity of 50%, in particular the maximal 1 cm³/m² per day at 23°C and a relative humidity of 50%, in particular maximal 0.2 cm³/m² per day at 23°C and a relative humidity of 50%.

In embodiments, the multilayer, in particular the supplementary layer, in particular a metallisation, AlOx-layer and/or SiOx layer, can have a water vapor and/or humidity transmission barrier of a maximum of 25 g/m² per day at 23°C and a relative humidity of 85%, in particular a maximum of 15 g/m² per day at 23°C and a relative humidity of 85%, in particular a maximum of 10 g/m² per day at 23°C and a relative humidity of 85%, in particular a maximum of 7 g/m² per day at 23°C and a relative humidity of 85%, in particular a maximum of 1 g/m² per day at 23°C and a relative humidity of 85%, in particular a maximum of 0.5 g/m² per day at 23°C and a relative humidity of 85%, in particular a maximum of 0.1 g/m² per day at 23°C and a relative humidity of 85%. The water vapor and/or humidity barrier in this text is determined according to ISO 15106-2 (as of April 2022).

In some embodiments, the multilayer comprises a wet coating. The wet coating can be arranged adjacent to the supplementary layer. The wet coating can be applied as a liquid coating.

In some embodiments, the wet coating comprises a water-soluble polymer. The water-soluble polymer of the wet coating can be similar to the water-soluble polymer of the polymer layer, in particular the water-soluble polymer can comprise PVOH.

In some embodiments, the wet coating is arranged facing away from the paper base layer or wherein the wet coating is arranged adjacent to the paper base layer. The wet coating facing away from the paper base layer enables to reduce the coefficient of friction. Additionally, the coverage of the supplementary layer with the wet coating can increase the sealing ability of the multilayer. Furthermore, the wet coating can fixate the supplementary layer. The additional wet coating can protect the supplementary layer from mechanical stress, so the barrier properties are not damaged. The wet coating can be the outer most layer of the multilayer.

On the other hand, if the wet coating is arranged adjacent to the paper base layer the adhesion to the paper base layer can be improved. The wet coating can be arranged between the paper base layer and the supplementary layer. The improved adhesion can result in a simplified manufacturing of a multilayer.

The invention also concerns a coated film comprising a polymer layer and a supplementary layer, wherein the polymer layer comprises a water-soluble polymer. The supplementary layer is an application of a metallisation, AlOx-layer and/or SiOx layer. The coated film can be a film, in particular a solid film. The film can be handle as stable object.

In some embodiments, the polymer layer is designed as a film and the supplementary layer is arranged on a flat side of the polymer layer. The supplementary layer may cover essentially the whole flat side of the polymer layer.

The invention further concerns a method for manufacturing a multilayer, the method comprising the steps of:
- applying a supplementary layer to a polymer layer to build a coated film;
- applying the coated film on a paper base layer.

In embodiments, the polymer layer is designed as a (co-)extruded film.

In embodiments, the polymer layer comprises a water-soluble polymer, in particular PVOH. Furthermore, the supplementary layer is an application of a metallisation, AlOx-layer and/or SiOx layer. The supplementary layer has a water vapor transmission barrier.

In some embodiments, one flat side of the paper base layer is free of a coated film.

In embodiments, the coated film is applied to the paper base layer with an adhesive. The adhesive can be applied in liquid form. The adhesive can be applied both to the paper and to the coated film before gluing the two layers together. Both options are feasible and realistic in practice. The adhesive may comprise a water-soluble polymer, in particular PVOH, as described above.

Furthermore in embodiments, the supplementary layer is arranged facing the paper base layer.

In embodiments, the supplementary layer, in particular the AlOx-layer, can be applied by different processes. For example, the supplementary layer, in particular the AlOx-layer, can be applied by:
- Reactive thermal evaporation of aluminium with oxygen
- Plasma assisted deposition
- polymeric atmospheric coating.

In embodiments, depending on the layer structure of the multilayer it is to be decide which process is most suitable. The applied process can be changed from layer structure to layer structure.

The metallisation might be regarded as the most proven process, providing good barrier properties, comparatively thick layer. Nevertheless, the metallic appearance of the supplementary layer might intuitively discourage the user of recyclable packaging, even if the packaging is recyclable in the paper recycling cycle, in particular in paper recycling according to DIN EN 13430 (as of the end of 2021).

The invention further concerns a use of the multilayer as described above for packaging, in particular for food packaging, in particular for packaging coffee as well as a packaging comprising the above described multilayer.

The invention further concerns a coffee pouch comprising the multilayer as described above. The paper base layer is facing to the outside of the coffee pouch. Accordingly, the supplementary layer is facing towards the inside of the coffee pouch. The inside of the coffee pouch is the side potentially being in contact with coffee. The outside of the coffee pouch is the side being touched by the costumer in the store before opening the coffee pouch. In other words, the outside of the coffee pouch is visible when filled with coffee and closed. This arrangement makes it possible that the costumer can have a satisfying haptic experience from touching a rather natural paper base layer. Additionally, the multilayer provides sealing verses oxygen and humidity (water vapor) to ensure quality of the enclosed/sealed coffee.

Further preferred embodiments are evident from the dependent patent claims. Features of the method claims may be combined with features of the device claims and vice versa.

The subject matter of the invention will be explained in more detail in the following text with reference to exemplary embodiments which are illustrated in the attached drawings, in which:
- Figure 1: schematically shows a three-layered multilayer 10;
- Figure 2: shows an additional wet coating facing away from a paper base layer; and,
- Figure 3: shows a multilayer with a wet coating arranged adjacent to the paper base layer.

The reference symbols used in the drawings, and their meanings, are listed in summary form in the list of reference symbols. In principle, identical parts are provided with the same reference symbols in the figures.

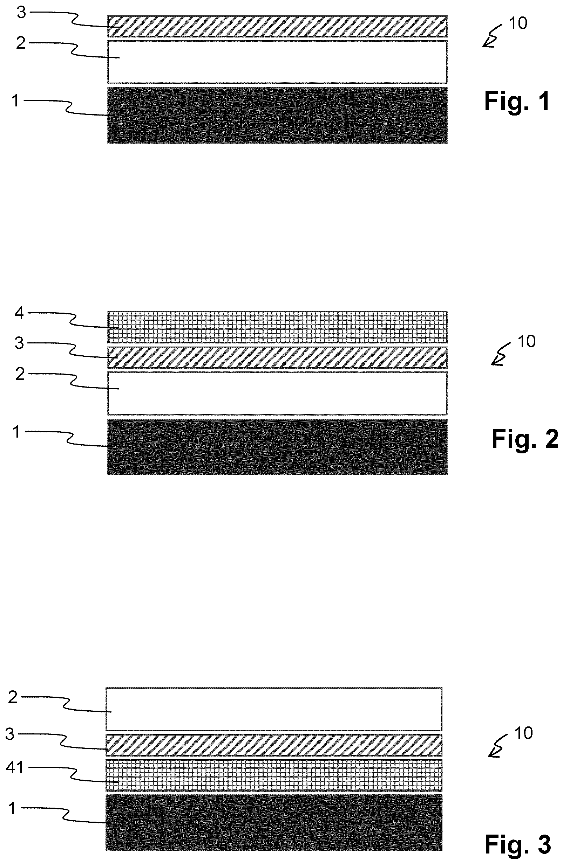

**Figure 1** schematically shows a three-layered multilayer 10. The multilayer 10 comprises a paper base layer 1 arranged adjacent to a polymer layer 2. On top of the polymer layer 2 a supplementary layer 3 is arranged. The supplementary layer 3 is an application of a metallisation, AlOx-layer and/or SiOx layer 31. The polymer layer 2 comprises a water-soluble polymer 21. The water-soluble polymer 21 is comprises PVOH. The water-soluble polymer 21 may also be at least one of:
- poly(vinyl alcohol) (PVOH),
- cellulose-ether polymer,
- Butenediol-Vinylalcohol-Copolymer (BVOH), and
- Ethylene-Vinylalcohol-Copolymers (EVOH).

The polymer layer 2 is a (co-)extruded layer. The polymer layer 2 is designed as a film appliable to the paper base layer 1.

**Figure 2** shows a multilayer 10 as depicted in figure 1 with an additional wet coating 4 facing away from a paper base layer 1. The wet coating 4 comprises a water-soluble polymer 21, in particular PVOH. The wet coating 4 is arranged adjacent to the supplementary layer 3. The wet coating 4 has a desirable coefficient of friction 33 improving the handling of the multilayer 10. Additionally, the wet coating 4 is protecting the supplementary layer 3 from mechanical stress, resulting in reliable barrier performance of the supplementary layer 3 and therefore of the multilayer 10.

**Figure 3** shows a multilayer 10 with a wet coating 4 arranged adjacent to the paper base layer 1. The wet coating 4 acts as a polymer-based adhesive 41. The adhesive 41 comprises a water-soluble polymer 21.

The adhesive 41 is PVOH-based and is applied onto a coated film 22. The coated film 22 comprises a film of water-soluble polymer 21 as the polymer layer 2 and the supplementary layer 3. The supplementary layer 3 is applied on a flat surface of the polymer layer 2. The adhesive 41 is applied on the supplementary layer 3 and is arranged to face the paper base layer 1. Accordingly, the polymer layer 2 is facing away from the paper base layer 1.

Due to the application of the adhesive 41 onto the coated film 22 the manufacturing of the multilayer 10 is simplified, as the coated film 22 can be handled as one piece being prepared before laminating with the paper base layer 1. In the resulting multilayer 10 the supplementary layer 3 is sandwiched between the polymer layer 2 and the wet coating 4. This enables to protect the barrier properties of the multilayer 10, in particular of the supplementary layer 3.

While the invention has been described in present preferred embodiments of the invention, it is distinctly understood that the invention is not limited thereto, but may be otherwise variously embodied and practised within the scope of the claims.

## Claims

1. A multilayer (10) comprising
- a paper base layer (1),
- a polymer layer (2) and
- a supplementary layer (3);
wherein the supplementary layer (3) is an application of a metallisation, AlOx-layer and/or SiOx layer (31);
wherein the supplementary layer (3) has a water vapor transmission barrier; wherein the polymer layer (2) comprises a water-soluble polymer (21), in particular PVOH.

2. The multilayer (10) according to claim (1), wherein the supplementary layer (3) is arranged on one flat side of the polymer layer (2).

3. The multilayer (10) according to any of the previous claims, wherein the multilayer (10) comprises an oxygen transmission rate of a maximum of 3 cm³/m² per day at 23°C and a relative humidity of 50%, in particular the maximal 1 cm³/m² per day at 23°C and a relative humidity of 50%, in particular maximal 0.2 cm³/m² per day at 23°C and a relative humidity of 50%.

4. The multilayer (10) according to any of the previous claims, wherein the multilayer (10) comprises a wet coating (4), wherein the wet coating (4) is arranged adjacent to the supplementary layer (3).

5. The multilayer (10) according to claim 4, wherein the wet coating (4) comprises a water-soluble polymer (21), in particular wherein the water-soluble polymer (21) of the wet coating (4) is similar to the water-soluble polymer (21) of the polymer layer (2).

6. The multilayer (10) according to any one of claims 4-5, wherein the wet coating (4) is arranged facing away from the paper base layer (1) or wherein the wet coating (4) is arranged adjacent to the paper base layer (1).

7. A coated film (22) comprising a polymer layer (2) and a supplementary layer (3), wherein the polymer layer (2) comprises a water-soluble polymer (21) and wherein the supplementary layer (3) is an application of a metallisation, AlOx-layer and/or SiOx layer (31).

8. Coated film (22) according to claim 7, wherein the polymer layer (2) is designed as a film and the supplementary layer (3) is arranged on a flat side of the polymer layer.

9. The method for manufacturing a multilayer (10), in particular a multilayer (10) according of one of the claims 1-6, the method comprising the steps of:
- applying a supplementary layer (3) to a polymer layer (2) [coextruded] to build a coated film;
- applying the coated film on a paper base layer (1).
wherein the polymer layer (2) comprises a water-soluble polymer (21), in particular PVOH; and
wherein the supplementary layer (3) is an application of a metallisation, AlOx-layer and/or SiOx layer (31);
wherein the supplementary layer (3) has a water vapor transmission barrier.

10. The method according to claim 9, wherein the coated film is applied to the paper base layer (1) with an adhesive (41),
wherein the supplementary layer (3) is arranged facing the paper base layer (1); and
wherein the adhesive (41) comprises a water-soluble polymer (21), in particular PVOH.

11. Use of the multilayer (10) according to any one of claims 1-6 for packaging, in particular for food packaging, in particular for packaging coffee.

12. Packaging comprising a multilayer (10) according to one of claims 1-6.

13. Coffee pouch (5) comprising a multilayer (10) according to one of claims 1-6, wherein the paper base layer (1) is facing to the outside of the coffee pouch (5); and
wherein the supplementary layer (3) is facing towards the inside of the coffee pouch (5).
